# EUROPEAN PATENT SPECIFICATION

(11) **EP 2 210 679 B1**
(45) Date of publication and mention of the grant of the patent: **12.09.2012**
(21) Application number: 08840702.8
(22) Date of filing: 16.10.2008
(51) Int. Cl.: B21C 47/04, B23D 19/06, B21C 47/18, B21C 47/26

(54) **RECOILING FACILITY OF MAGNESIUM ALLOY SHEET**
AUFWICKELEINRICHTUNG FÜR EIN FLÄCHENGEBILDE AUS EINER MAGNESIUMLEGIERUNG
INSTALLATION DE RÉENROULEMENT DE FEUILLE EN ALLIAGE DE MAGNÉSIUM

(30) Priority: 16.10.2007 JP 2007269059
(43) Date of publication of application: 28.07.2010
(73) Proprietor: IHI Metaltech Co., Ltd., Tokyo 105-0004 (JP); IHI Corporation, Tokyo 135-8710 (JP)
(72) Inventor: TAZOE, Nobuhiro, Tokyo 105-0004 (JP); HONJOU, Hisashi, Yokohama-shi Kanagawa 235-8501 (JP); MATSUMURA, Hideo, Yokohama-shi Kanagawa 235-8501 (JP); YANAI, Katuhiko, Hitachiomiya-shi Ibaraki 319-2134 (JP); YANAI, Fumitaka, Hitachiomiya-shi Ibaraki 319-2134 (JP)
(74) Representative: Waldren, Robin Michael
(86) International application number: PCT/JP2008/068747
(87) International publication number: WO 2009/051177

(56) References cited:
- JP-A- 9 225 518
- JP-A- 10 043 931
- JP-A- 61 135 420
- JP-A- 2001 252 703
- JP-A- 2005 105 358
- JP-B2- 3 521 863

## Description

### [Technical Background]

In the majority of lightweight metal sheets which undergo multi-pass rolling, there are many cases of cracks occurring in both width edges or of shape defects occurring therein. When this type of lightweight metal sheet is shipped as a product, the two width edges thereof are trimmed so that the sheets are shaped to a predetermined width. In addition, this trimming removes crack portions and shape defect portions so that the sheets are in a state that allows them to be shipped as products.
Conventional examples of apparatuses that perform the above described processing are disclosed, for example, in the following patent documents 1 to 4.

Patent document 1 discloses a scrap borer that enables the structure of the facility to be simplified, and enables manufacturing costs and maintenance and administration costs to be reduced.
Patent document 2 discloses a steel belt finishing facility equipped with side trimmers which makes it possible to achieve a reduction in equipment costs, and a shortening of the cycle time, and that makes it possible to prevent trimming defects.
Patent document 3 discloses a side trimmer apparatus that is able to perform side trimming processing on metal plates stably without generating any trimming defects.
Patent document 4 discloses a side trimmer apparatus for metal belts that is able to reliably prevent trimming scrap being scattered about and that is able to perform the side trimming of lightweight materials rapidly and stably even in non-steady portions such as locations where the trim width on one side becomes extremely narrow or locations where edge fractures are present.

These elongated lightweight metal sheets are wound into a cylindrical shape so as to form a coil material, however, shape defects and coil memory caused by this winding are often generated in this type of coiled lightweight metal sheet. In order to repair these shape defects and coil memory, for example, a leveler is used.
A conventional example of a leveler is disclosed in Patent document 5 (see below). The leveler disclosed in Patent document 5 is used to perform shape correction on thin plate-shaped bar materials and to remove residual stress, however, it does not heat up a material and then perform leveling on this material while it is in a warm state.
[Patent document 1] Japanese Patent Application Laid-Open (JP-A) No. 10-43931
[Patent document 2] Japanese Patent Application Laid-Open (JP-A) No. 2002-28703
[Patent document 3] Japanese Patent Application Laid-Open (JP-A) No. 2000-225512
[Patent document 4] Japanese Patent Application Laid-Open (JP-A) No. 2007-118118
[Patent document 5] Japanese Patent Application Laid-Open (JP-A) No. H6-77375

### [Disclosure of the Invention]

### [Problems to be Solved by the Invention]

Elongated lightweight metal sheets which are reverse rolled in either a hot or warm state are commonly wound onto a metal mandrel (i.e., core material) having a uniform internal diameter so as to form a coil material. Accordingly, when they are shipped in the form of a coil material equipped with a fixed mandrel, because the fixed mandrel is not required after the lightweight metal sheet has been used up, it is necessary to either dispose of the fixed mandrels or return them to the shipper or the like which uses up time and labor. Accordingly, it is desirable for a coil material to be rewound and shipped without a fixed mandrel having to be used.
Moreover, when the lightweight metal sheet is a magnesium alloy, if the magnesium alloy is trimmed at room temperature it is easy for defects to occur such as the generation of minute cracks.

However, the conventional apparatuses disclosed in the above described patent documents give no consideration to the fact that magnesium alloy cracks easily at room temperature.

The present invention was conceived in view of the above described circumstances and it is an object thereof to manufacture a high quality product coil by rewinding a coil material which has been formed by winding a magnesium alloy sheet onto a fixed mandrel so that any further need for the fixed mandrel is eliminated, and by trimming shape defect portions and crack portions in the plate width end portions which are generated by multi-pass rolling.

### [Means for Solving the Problem]

In order to solve the above described problems, the following apparatuses and methods are employed in the present invention.
As a first aspects of the present invention, a recoiling facility for a magnesium alloy sheet is employed which includes: an unwinder which is able to unwind a coil material formed by winding magnesium alloy onto a fixed mandrel; a heating furnace which is located on the downstream side of the unwinder and which heats the magnesium alloy sheet which has been unwound from the coil material to a predetermined temperature; a trimmer which is located on the downstream side of the heating furnace and which trims both side edges of the magnesium alloy sheet; and a winder which is located on the downstream side of the trimmer and which rewinds the magnesium alloy sheet.

In the recoiling facility for a magnesium alloy sheet according to the above described first aspects of the present invention, it is also possible for there to be further provided a scrap borer which is located on the downstream side of the trimmer and on the upstream side of the winder, and onto which is wound scrap trimmed from the two side edges of the magnesium alloy sheet.

Furthermore, in the recoiling facility for a magnesium alloy sheet according to the above described first aspects of the present invention, it is also possible for there to be further provided a leveler which is located on the downstream side of the heating furnace and on the upstream side of the trimmer, and which corrects any shape defects in the magnesium alloy sheet.

In addition, in the recoiling facility for a magnesium alloy sheet according to the above described first aspects of the present invention, it is also possible for the winder to rewind the magnesium alloy sheet without using a fixed mandrel.

### [Effects of the Invention]

According to the present invention, because a magnesium alloy sheet is trimmed while it is heated to a predetermined temperature, it is possible to prevent cracks being generated in the magnesium alloy sheet and to maintain a superior product quality.

### [Brief description of the drawings]

[FIG. 1 FIG. 1 is a front view showing the structure of a recoiling facility for magnesium alloy sheets in an embodiment of the present invention.
[FIG. 2] FIG. 2 is a plan view showing the structure of the above recoiling facility for magnesium alloy sheets.

### [Best Embodiments for Implementing the Invention]

An embodiment of the present invention will now be described with reference made to the drawings.

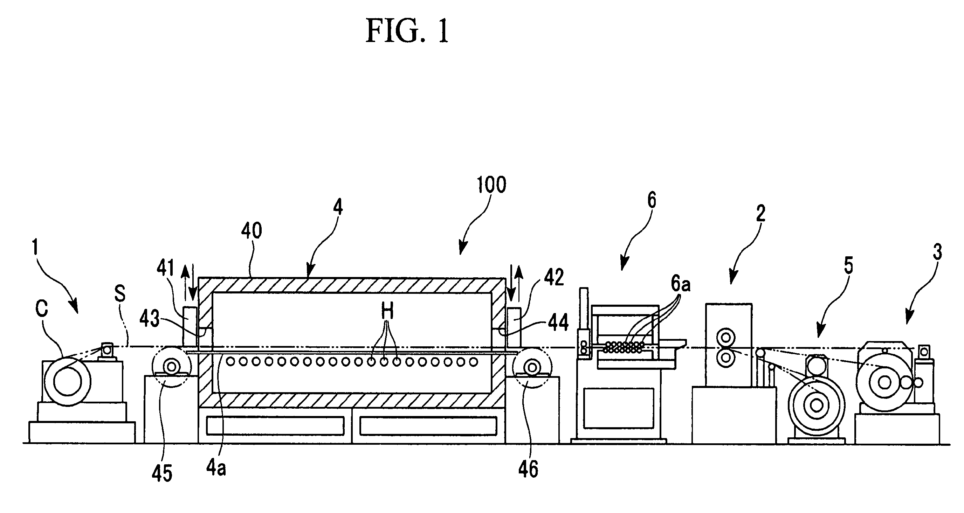

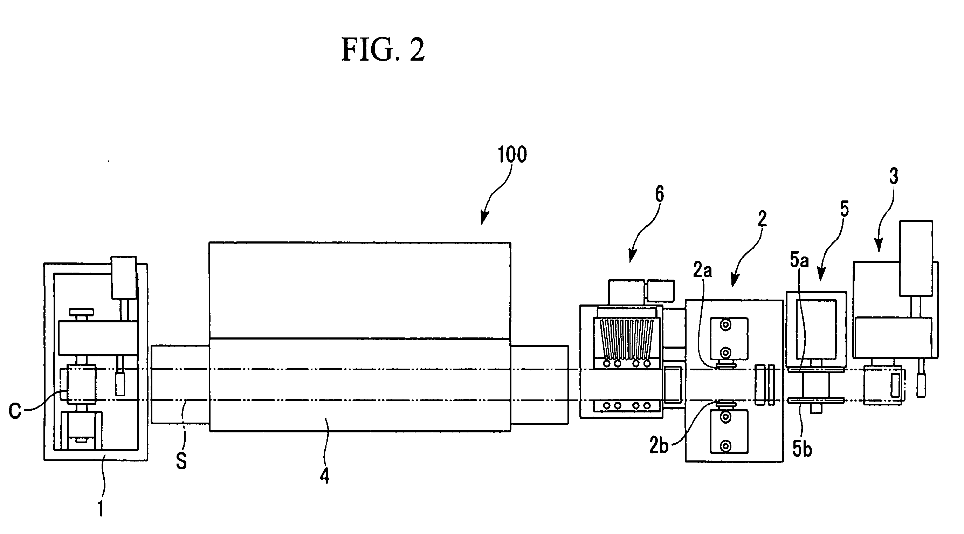

FIGS. 1 and 2 are a front view and a plan view showing the structure of a recoiling facility 100 for magnesium alloy sheets in the present embodiment.
As is shown in FIGS. 1 and 2, this recoiling facility 100 is provided with an unwinder 1, a trimmer 2, a winder 3, a heating furnace 4, a scrap borer 5, and a leveler 6.

Firstly, a coil material C is manufactured by the hot rolling of a magnesium alloy plate, and by winding the resulting elongated magnesium alloy sheet S onto a fixed mandrel.
The unwinder 1 is provided with a supporting portion that supports both ends of the fixed mandrel such that they are able to rotate freely, and with a drive source that causes the fixed mandrel to rotate in the unwinding direction of the magnesium alloy sheet S, and holds the aforementioned coil material C so as to be able to unwind it when needed.

The trimmer 2 is provided with a pair of side cutters 2a and 2b which face each other at a predetermined spacing, and trims both width edges of a magnesium alloy sheet S which has been unwound from the coil material C by the unwinder 1. As a result, portions where cracks have occurred and shape defect portions are removed from the two width edges of the magnesium alloy sheet S, and the magnesium alloy sheet S is finished to a predetermined width dimension.

The winder 3 receives the magnesium alloy sheet S after it has been trimmed by the trimmer 2 which is wound onto it without a core being used.

The heating furnace 4 is located between the unwinder 1 and the trimmer 2, and is formed by heaters H and a table 4a inside a housing 40 with the heaters H being provided in a bottom portion thereof.
The housing 40 is provided with an entry side shutter 41, an exit side shutter 42, apertures 43 and 44, and transporting auxiliary rollers 45 and 46.

The aperture 43 is the intake aperture for the magnesium alloy sheet S and is formed in the upstream side surface of the housing 40, while the aperture 44 is the discharge aperture for the magnesium alloy sheet S and is formed in the downstream side surface of the housing 40.
The entry side shutter 41 opens and closes the upstream side aperture 43 of the housing 40. The exit side shutter 42 opens and closes the downstream side aperture 44 of the housing 40.
The transporting auxiliary rollers 45 and 46 are rotated by a drive source such as a motor (not shown), and assist in the coil transporting by either drawing the magnesium alloy sheet S inside the heating furnace 4 or extracting it to the outside of the furnace.

The heaters H heat the interior of the housing 40 to a predetermined temperature (approximately 200°C) and then maintain this temperature. From the start of the heating until the interior of the housing 40 reaches the predetermined temperature, the entry side shutter 41 and the exit side shutter 42 are closed.
The table 4a is a metal plate having a smooth top surface, and is heated by heat generating bodies located in a block beneath it. The table 4a allows a magnesium alloy sheet S to move smoothly over this smooth top surface.

This heating furnace 4 heats a magnesium alloy sheet S to a predetermined temperature so as to soften it to a suitable degree and simplify handling including processing such as the above described trimming and the like. For example, it is possible to prevent the occurrence of defects such as unforeseen fractures being generated in the magnesium alloy sheet S from impact received during the trimming.

The scrap borer 5 is located on the downstream side of the trimmer 2 and the upstream side of the winder 3. Scrap which is generated by the above described trimming (i.e., portions which are cut off from both side edges of the magnesium alloy sheet S) is wound onto the scrap borer 5. Because this scrap is generated from both sides of the magnesium alloy sheet S, wind-on portions 5a and 5b of the scrap borer 5 are provided on both sides of the transporting path of the magnesium alloy sheet S.

The leveler 6 is located between the unwinder 1 and the trimmer 2 on the downstream side of the heating furnace 4. As a result of the magnesium alloy sheet S passing between a plurality of rollers 6a which are arranged in a zig-zag pattern when viewed in cross-section, any shape defect portions or any distortion in the magnesium alloy sheet S which has been generated due to the magnesium alloy sheet S being left rolled in a coil shape are corrected using warmth.
Because the leveler 6 is located on the downstream side of the heating furnace 4, it straightens the magnesium alloy sheet S which has been heated in the heating furnace 4 and softened to a suitable degree. As a result, there is no occurrence of fractures and the like and superior leveling can be preformed.

Using this type of structure this recoiling facility 100 performs the following operations.
Firstly, an operator preheats the heating furnace 4 to a predetermined temperature. At this time, the entry side shutter 41 and the exit side shutter 42 are closed.
Next, the operator loads a coil material C formed by winding a magnesium alloy sheet S onto a mandrel in the unwinder 1. The unwinder 1 unwinds the magnesium alloy sheet S from the coil material C.

Next, the operator raises the shutters 41 and 42 as far as necessary, so as to open the upstream side and the downstream side of the heating furnace 4 in a slit shape.
Next, the operator inserts the front end of the magnesium alloy sheet S which has been unwound from the coil material C into the heating furnace 4 via the aforementioned slit.
The magnesium alloy sheet S which has been inserted inside the heating furnace 4 is supported by the table 4a, and a distal end portion thereof slides over the table 4a as it is moved through the interior of the furnace. The magnesium alloy sheet S is then moved to the outside of the heating furnace 4.
The magnesium alloy sheet S is heated to a predetermined temperature (approximately 200°C) as it is being transported through the interior of the heating furnace 4.

When the front end of the magnesium alloy sheet S exits from the downstream side slit in the heating furnace 4, the operator sets the magnesium alloy sheet S in the leveler 6.
The leveler 6 corrects any shape defects or distortion in the magnesium alloy sheet S which has been heated in the heating furnace 4 and flattens the magnesium alloy sheet S. At this time, because the magnesium alloy sheet S has been softened to a suitable degree by heat, there is no occurrence of faults such as fractures being generated in the magnesium alloy sheet S caused by the leveling by the leveler 6.

When the front end of the magnesium alloy sheet S exits from the leveler 6, the operator sets the magnesium alloy sheet S in the trimmer 2.
The trimmer 2 trims both width edges of the magnesium alloy sheet S so as to shape the magnesium alloy sheet S to a predetermined width, and so as to also remove any portions where cracks or shape defects or the like have been generated in the two width edges of the magnesium alloy sheet S. At this time as well, because the magnesium alloy sheet S has been softened to a suitable degree by the heat and is in a warm state, there is no occurrence of faults such as fractures being generated in the magnesium alloy sheet S caused by the trimming by the trimmer 2.

The two side edges of the magnesium alloy sheet S which have been trimmed by the trimmer 2 are discharged as elongated belt-shaped scrap.
The operator sets the front end of the scrap discharged from the trimmer 2 in the scrap borer 5 which is located on the downstream side of the trimmer 2.
The scrap borer 5 receives from beneath the magnesium alloy sheet S both side portions thereof which are wound onto it from above. As a result, it is possible to prevent the magnesium alloy sheet S being damaged by scrap after it has been shaped.

When the front end of the magnesium alloy sheet S which has been shaped to a predetermined width exits from the trimmer 2, the operator sets the magnesium alloy sheet 2 in the winder 3. At this time, the operator rolls a predetermined length of the magnesium alloy sheet S into a cylindrical shape when setting it, so that the magnesium alloy sheet S is wound onto the winder 3 without a core being used.

In this manner, according to the present embodiment, a magnesium alloy sheet S is rewound without a mandrel being required, and both side edges thereof can be trimmed and shaped. Because the magnesium alloy sheet S is worked after having been softened to a suitable degree by being heated in the heating furnace 4, it is possible to prevent the occurrence of faults such as unforeseen cracks being generated in the magnesium alloy sheet S. Accordingly, it is possible to maintain a superior product quality.

Note that the above described embodiment is only an example and in no way limits the present invention. Various modifications can be made to the embodiment insofar as they do not depart from the scope of the present invention as defined by the claims.

For example, the heaters H may be arranged in a layout different from that shown in FIG. 1 provided that they are still able to heat the magnesium alloy sheet S to a predetermined temperature.

Moreover, it is not necessary for the heating furnace 4 to be constructed such that the magnesium alloy sheet S is able to move smoothly over the table 4a as in the above described embodiment, and it is also possible, for example, for a plurality of transporting rollers which are arranged in parallel with each other to be driven to rotate by a drive source such as a motor or the like so that they transport the magnesium alloy sheet S.

### [Industrial applicability]

According to the recoiling facility for a magnesium alloy sheet of the present invention, a manufactured magnesium alloy sheet does not require a mandrel, and it is possible to prevent the occurrence of cracks in the sheet and maintain a superior product quality.

### Reference Numerals]

- 100 ...: Recoiling facility
- 1 ...: Unwinder
- 2 ...: Trimmer
- 3 ...: Winder
- 4 ...: Heating furnace
- 5 ...: Scrap borer
- 6 ...: Leveler
- C ...: Coil material
- S ...: Magnesium alloy sheet

## Claims

1. A recoiling facility (100) for a magnesium alloy sheet comprising:
an unwinder (1) which is able to unwind a coil material formed by winding magnesium alloy onto a fixed mandrel;
a heating furnace (4) which is located on the downstream side of the unwinder (1) and which is adapted to heat the magnesium alloy sheet which has been unwound from the coil material to a predetermined temperature;
a trimmer (2) which is located on the downstream side of the heating furnace (4) and which is adapted to trim both side edges of the magnesium alloy sheet; and
a winder (3) which is located on the downstream side of the trimmer (2) and which is adapted to rewind the magnesium alloy sheet.

2. The recoiling facility for a magnesium alloy sheet according to claim 1, wherein there is further provided a scrap borer (5) which is located on the downstream side of the trimmer (2) and on the upstream side of the winder (3), and onto which scrap trimmed can be wound from the two side edges of the magnesium alloy sheet.

3. The recoiling facility for a magnesium alloy sheet according to claim 1 or 2, wherein there is further provided a leveler (6) which is located on the downstream side of the heating furnace (4) and on the upstream side of the trimmer (2), and which is adapted to correct any shape defects in the magnesium alloy sheet.

4. The recoiling facility for a magnesium alloy sheet according to any one of claims 1 through 3, wherein the winder is adapted to rewind the magnesium alloy sheet without using a fixed mandrel.

## Patentansprüche

1. Wiederaufwickeleinrichtung (100) für ein Flächengebilde aus einer Magnesiumlegierung, umfassend:
eine Abwickelvorrichtung (1), die ein Wickelmaterial, das durch Aufwickeln einer Magnesiumlegierung auf einen fixierten Dorn gebildet ist, abwickeln kann;
einen Heizofen (4), der sich auf der stromabwärts gelegenen Seite der Abwickelvorrichtung (1) befindet und der so ausgelegt ist, dass er das Flächengebilde aus einer Magnesiumlegierung, das vom Wickelmaterial abgewickelt wurde, auf eine vorbestimmte Temperatur erhitzt;
eine Schneidvorrichtung (2), die sich auf der stromabwärtsgelegenen Seite des Heizofens (4) befindet und die so ausgelegt ist, dass sie beide Seitenkanten des Flächengebildes aus einer Magnesiumlegierung abschneidet; und
eine Wickelvorrichtung (3), die sich auf der stromabwärtsgelegenen Seite der Schneidvorrichtung (2) befindet und die so ausgelegt ist, dass sie das Flächengebilde aus einer Magnesiumlegierung wieder aufwickelt.

2. Wiederaufwickeleinrichtung für ein Flächengebilde aus einer Magnesiumlegierung nach Anspruch 1, wobei ferner ein Abfallbohrer (5) vorgesehen ist, der sich auf der stromabwärts gelegenen Seite der Schneidvorrichtung (2) und auf der stromaufwärts gelegenen Seite der Wickelvorrichtung (3) befindet und auf den Abfall, der von den beiden Seitenkanten des Flächengebildes aus einer Magnesiumlegierung abgeschnitten wurde, aufgewickelt werden kann.

3. Wiederaufwickeleinrichtung für ein Flächengebilde aus einer Magnesiumlegierung nach Anspruch 1 oder 2, wobei ferner eine Nivelliervorrichtung (6) vorgesehen ist, die sich auf der stromabwärts gelegenen Seite des Heizofens (4) und auf der stromaufwärts gelegenen Seite der Schneidvorrichtung (2) befindet und die so ausgelegt ist, dass sie jegliche Formfehler des Flächengebildes aus einer Magnesiumlegierung korrigiert.

4. Wiederaufwickeleinrichtung für ein Flächengebilde aus einer Magnesiumlegierung nach einem der Ansprüche 1 bis 3, wobei die Wickelvorrichtung so ausgelegt ist, dass sie das Flächengebilde aus einer Magnesiumlegierung ohne Verwenden eines fixierten Dorns wieder aufwickelt.

## Revendications

1. Installation de réenroulement (100) pour une feuille d'alliage de magnésium comprenant :
un dérouleur (1) qui est capable de dérouler un matériau en bobine formé en enroulant un alliage de magnésium sur un mandrin fixe ;
un four de chauffage (4) qui est situé du côté aval du dérouleur (1) et qui est conçu pour chauffer la feuille d'alliage de magnésium qui a été déroulée du matériau en bobine à une température prédéterminée ;
une cisaille (2) qui est située du côté aval du four de chauffage (4) et qui est conçue pour couper les deux bords latéraux de la feuille d'alliage de magnésium ; et
un enrouleur (3) qui est situé du côté aval de la cisaille (2) et qui est conçu pour réenrouler la feuille d'alliage de magnésium.

2. Installation de réenroulement pour une feuille d'alliage de magnésium selon la revendication 1, dans laquelle il est prévu en outre un aléseur de déchets (5) qui est situé du côté aval de la cisaille (2) et du côté amont de l'enrouleur (3), et sur lequel les déchets découpés peuvent être enroulés à partir des deux bords latéraux de la feuille d'alliage de magnésium.

3. Installation de réenroulement pour une feuille d'alliage de magnésium selon la revendication 1 ou 2, dans laquelle il est prévu en outre un égaliseur (6) qui est situé du côté aval du four de chauffage (4) et du côté amont de la cisaille (2), et qui est conçu pour corriger tous défauts de forme dans la feuille d'alliage de magnésium.

4. Installation de réenroulement pour une feuille d'alliage de magnésium selon l'une quelconque des revendications 1 à 3, dans laquelle l'enrouleur est conçu pour réenrouler la feuille d'alliage d'aluminium sans utiliser un mandrin fixe.
